Europäisches Patentamt

**European Patent Office**

**Office européen des brevets**

(11) Numéro de publication: **0 094 316**
**A1**

# (12) DEMANDE DE BREVET EUROPEEN

(21) Numéro de dépôt: **83400937.5**

(51) Int. Cl.³: **B 60 Q 3/04**

(22) Date de dépôt: **09.05.83**

(30) Priorité: **12.05.82 FR 8208255**

(71) Demandeur: **e.d. VEGLIA, 125, rue de Montreuil, F-75540 Paris Cedex 11 (FR)**

(43) Date de publication de la demande: **16.11.83 Bulletin 83/46**

(72) Inventeur: **Lebas, Roland, 5 & 7, rue Lereide, F-75013 Paris (FR)**

(84) Etats contractants désignés: **BE DE GB IT LU NL**

(74) Mandataire: **Bloch, Robert et al, 39 avenue de Friedland, F-75008 Paris (FR)**

(54) **Tableau de bord de véhicule à témoin d'alerte.**

(57) L'invention a pour objet un tableau de bord de véhicule dont au moins une lampe éclaire des figurines imprimées de la plaque avant translucide, celle-ci portant au moins une figurine particulière imprimée servant de témoin d'alerte éclairée par une lampe particulière, ou lampe d'alerte. La paroi du logement de la lampe d'alerte (8) est munie, au moins dans sa partie (9) commune avec celle du logement de la lampe (6) d'éclairage normal, d'un premier diffuseur (10) transparent et qu'entre le cadran (1) porteur de la figurine d'alerte (4) et la lampe d'alerte (8) est monté un second diffuseur (11) transparent teinté, de couleur différente ou identique avec intensité renforcée du premier diffuseur (10).

## Tableau de bord de véhicule à témoin d'alerte.

La présente invention concerne les tableaux de bord de véhicules dont au moins une lampe éclaire des figurines imprimées de la plaque avant translucide, celle-ci portant au moins une figurine particulière imprimée servant de témoin d'alerte éclairée par une lampe particulière, ou lampe d'alerte.

Lorsque le seuil d'alerte n'est pas atteint, la lampe d'alerte n'est pas allumée et la figurine d'alerte n'est pas éclairée. Cette situation peut être gênante, surtout lorsque le tableau de bord comporte une pluralité de témoins d'alerte que le conducteur a intérêt à bien situer.

L'invention vise à maintenir visible la figurine d'alerte, au même titre que les autres figurines imprimées, tout en lui permettant de jouer son rôle en cas d'alerte.

A cet effet, l'invention prévoit d'agencer le logement de la lampe d'éclairage normal de façon que celle-ci éclaire également la figurine d'alerte et d'agencer le logement de la lampe d'alerte de façon que celle-ci n'éclaire que cette figurine d'alerte, de telle sorte que, en cas d'alerte, cette figurine reçoit une lumière nettement différente de celle des autres figurines.

Dans une forme de réalisation particulière, la paroi du logement de la lampe d'alerte, au moins dans sa partie commune avec celle du logement de la lampe d'éclairage normal est munie d'un diffuseur transparent et entre le cadran porteur de la figurine d'alerte et la lampe d'alerte est monté un diffuseur transparent teinté, de couleur pouvant être différente de celle du précédent.

Grâce à cet agencement, en période de non-alerte, les rayons lumineux de la lampe d'éclairage normale du tableau de bord traversent également le diffuseur monté sur le cadran et la figurine d'alerte est éclairée de la même couleur que les autres figurines imprimées du combiné.

En cas d'alerte, la lampe d'alerte s'allume et ses rayons lumineux traversent le diffuseur situé au-dessus d'elle et éclairent la figurine d'alerte d'une couleur différente ou identique mais d'intensité renforcée.

Dans une autre forme de réalisation une plaque de matière conductrice de la lumière s'étend à la fois sous la figurine d'alerte et sous les autres figurines de façon que la lumière de la lampe d'éclairage normal est transmise à toutes les figurines, y compris à la figurine d'alerte.

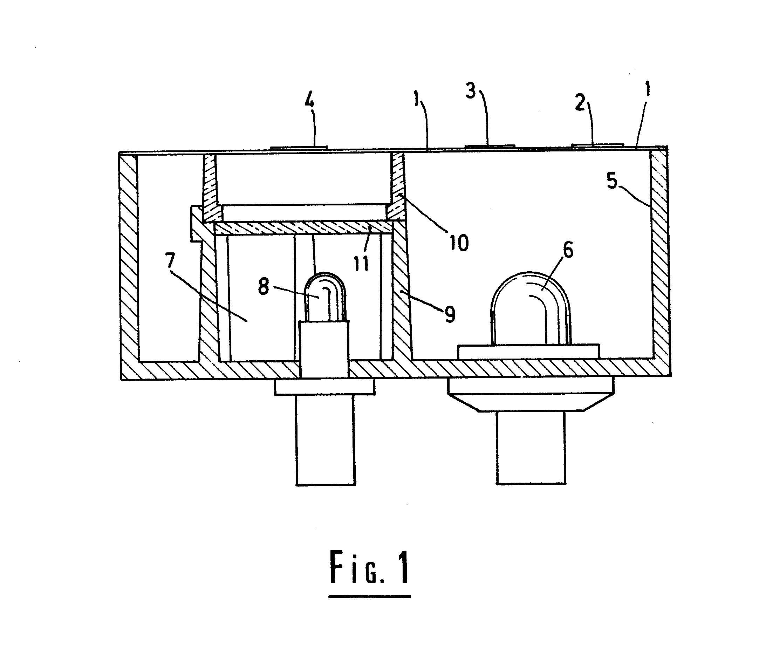

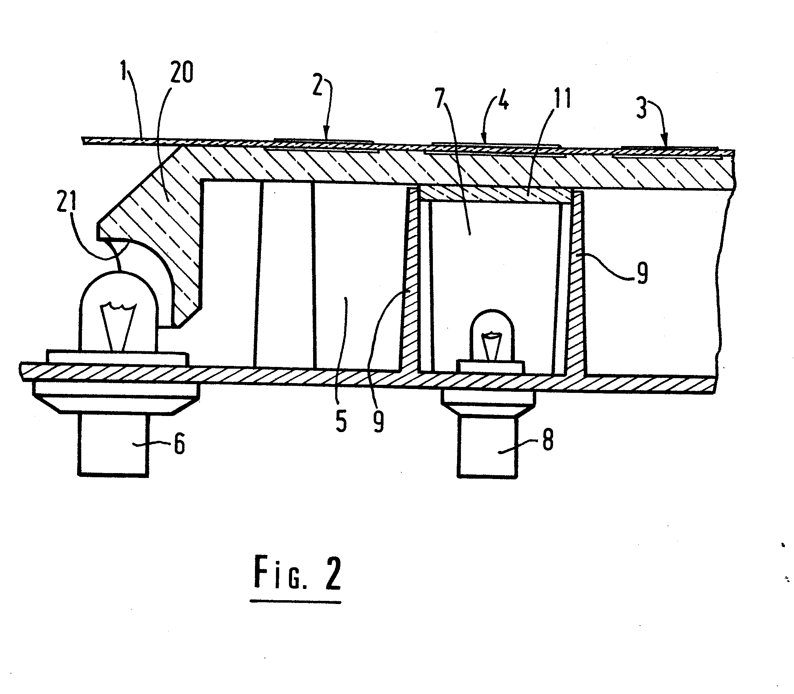

A titre nullement limitatif, on a représenté au dessin annexé deux exemples de réalisation de l'invention, dessin dont les figures 1 et 2 sont des vues schématiques en coupe horizontale d'une partie d'un tableau de bord agencé selon l'invention.

Comme on le voit sur la fig. 1, le tableau de bord comporte à l'avant, un cadran translucide 1 sur lequel sont imprimés les figurines 2, 3 et une figurine 4 correspondant à un signe d'alerte.

Derrière la partie du cadran 1 porteur des figurines imprimées 2, 3, est prévu un logement ou boîtier 5, au fond duquel est montée la lampe d'éclairage normale 6. Sous la partie du cadran portant la figurine d'alerte 4, est prévu un logement 7 au fond duquel est monté la lampe d'alerte 8. Les deux logements 5, 7 ont une paroi commune 9. La paroi supérieure du logement 7 est constitué par un diffuseur 10 transparent, incolore ou légèrement teinté. Une partie de ce diffuseur 10 forme également élément de paroi du logement 5.

A la base du diffuseur 10, est disposé, parallèlement au cadran 1, et au-dessus de la lampe 8, un diffuseur transparent 11 teinté, de couleur nettement différente de celle du diffuseur 10.

En marche normale, la lampe 6 éclaire, non seulement les figurines 2, 3, mais également la figurine d'alerte 4, les rayons lumineux traversant le diffuseur 10.

En cas d'alerte, la lampe 8 s'allume et ses rayons lumineux, traversant le diffuseur 11, éclairent la figurine 4 d'une couleur différente ou identique de celle donnée par la lampe 6, ce qui fait apparaître cette figurine 4 d'une couleur différente de celle des autres figurines 2,3.

Quand l'alerte cesse, la lampe 8 s'éteint, et la figurine 4 reprend la même couleur que les autres figurines 2, 3.

Dans l'exemple de la fig. 2, où les éléments analogues à ceux de la fig. 1 portent les mêmes chiffres de référence, le diffuseur 10 est remplacé par une plaque 20 de matière conductrice de la lumière qui s'étend sous toutes les figurines 2, 3.. y compris la figurine d'alerte 4 et la lampe d'éclairage normal 6 est montée sous la surface d'extrémité 21 de la plaque 20, de façon que ses rayons lumineux se propagent dans cette plaque.

En marche normale, la lampe 6 éclaire donc toutes les figurines, y compris la figurine d'alerte 4, les rayons lumineux issus de la lampe 6 parcourant toute la plaque 20. En cas d'alerte, la lampe 8 s'allume et ses rayons lumineux, traversant le diffuseur 11, éclairent la figurine 4 d'une couleur différente ou identique, mais d'intensité renforcée.

Revendications

1. Tableaux de bord de véhicule dont au moins une lampe éclaire des figurines imprimées de la plaque avant translucide, celle-ci portant au moins une figurine particulière imprimée servant de témoin d'alerte éclairée par une lampe particulière, ou lampe d'alerte, caractérisés par le fait que le logement de la lampe d'éclairage normal est agencé de façon que celle-ci éclaire également la figurine d'alerte et le logement de la lampe d'alerte est agencé de façon que celle-ci n'éclaire que cette figurine d'alerte.

2. Tableaux de bord selon la revendication 1, dans lequel la paroi du logement de la lampe d'alerte (8) est munie, au moins dans sa partie (9) commune avec celle du logement de la lampe (6) d'éclairage normal, d'un premier diffuseur (10) transparent et qu'entre le cadran (1) porteur de la figurine d'alerte (4) et la lampe d'alerte (8) est monté un second diffuseur (11) transparent teinté, de couleur identique ou différente du premier diffuseur (10).

3. Tableaux de bord selon la revendication 2, dans lequel le premier diffuseur (10) forme toute la partie supérieure du logement de la lampe d'alerte (8) et le second diffuseur (11) est monté au niveau de raccordement entre cette partie supérieure et la partie inférieure (7) dudit logement.

4. Tableaux de bord selon la revendication 1, dans lequel une plaque de matière conductrice de la lumière (20) s'étend à la fois sous la figurine d'alerte (4) et sous les autres figurines (2, 3) de telle sorte que la lumière de la lampe d'éclairage normale (6) est transmise à toutes les figurines, y compris à la figurine d'alerte.

FIG. 1

Fig. 2

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-2 403 005 (JAEGER) <br> * En entier * | 1-4 | B 60 Q 3/04 |
| X | US-A-4 186 376 (UCHIDA) <br> * En entier * | 1 | |
| X | US-A-3 189 616 (PARSONS) <br> * En entier * | 1-4 | |

DOMAINES TECHNIQUES
RECHERCHES (Int. Cl. ³)

B 60 Q 3/04
F 21 Q 3/00

Le présent rapport de recherche a été établi pour toutes les revendications

| Lieu de la recherche <br> LA HAYE | Date d'achèvement de la recherche <br> 11-07-1983 | Examinateur <br> ONILLON C.G.A. |
|---|---|---|

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

 

& : membre de la même famille, document correspondant

OEB Form 1503. 03.82